# EUROPEAN PATENT APPLICATION

(11) **EP 2 296 311 A1**
(43) Date of publication of application: **16.03.2011**
(21) Application number: 09305828.7
(22) Date of filing: 10.09.2009
(51) Int. Cl.: H04L 12/22, H04L 9/08

(54) **Method for ciphering messages exchanged between two entities**

(71) Applicant: Gemalto SA, 92190 Meudon (FR); Cidway Technologies, Ltd., Britania Road London, Greater London N12 9RU (GB)
(72) Inventor: Pottier, Alexis, 13720 La Bouilladisse (FR); Filliat, Laurent, 1207Geneve (CH)

(57) **Abstract**

The invention is a method for ciphering a plurality of messages sent between a server and a client through a point-to-point link. The server and a client comprise a shared secret data and are able to generate time-based OTP from the shared secret data. A first OTP is generated from a first time by the client and sent to the server. The server retrieves the first time from the first OTP. The server and a client comprise a series of duration values. A series of time-based OTPs is generated from both the first time and the series of duration values in both server and client side. Each OTP has a validity duration which is generated from the duration value used for generating said OTP. The series of time-based OTP is used as a series of session keys for protection messages exchanged between the server and the client.

## Description

The present invention relates to methods for ciphering messages between two entities. It relates particularly to methods for ciphering a plurality of messages sent between two entities through a Web point-to-point link.

Exchanges of data between a client and a server over a network may require the protection of the data conveyed through the network. The data protection may be carried out with a session key which is known by both sides. In such a case the session key is called symmetric key. For high secure sessions, several session keys may be successively used during a unique session. For security reasons, the system must avoid to convey the session keys to be used from a side to the other side. The deployment of a large number of session keys between a client and a server is complex and required costly security mechanisms.

There is a need for providing a plurality of session keys at both a client and a server side without key transport.

An object of the invention is to solve the above mentioned technical problem.

The object of the present invention is a method of ciphering a plurality of messages sent between first and second entities through a point-to-point link. The first and second entities comprise a shared secret data and are capable of generating time-based One-Time-Passwords from said shared secret data. The method comprises a step of generating a first One-Time-Password from a first time in the second entity and sending the first One-Time-Password to the first entity. The method comprises a step of retrieving the first time from the first One-Time-Password in the first entity. Each of said first and second entities comprises a series of duration values. Said method comprises the step of generating a series of time-based One-Time-Passwords from both the first time and the series of duration values respectively in both first and second entities. Each of said generated time-based One-Time-Passwords has a validity duration which is generated from the duration value used for generating said One-Time-Password. Said method comprises the step of using said series of time-based One-Time-Passwords as a series of keys for ciphering/deciphering messages which are exchanged between first and second entities.

Advantageously, the validity duration of a One-Time-Password may be equal to the duration value used for generating said One-Time-Password.

The series of duration values may be preset.

Alternately, said first and second entities may comprise a second shared secret data and the series of duration values may be generated from the second shared secret data in both first and second entities.

Advantageously, said second entity may comprise a hardware OTP token.

The first entity may comprise a server providing video content.

Another object of the invention is a secure electronic token comprising a first secret data. The token is intended to exchange a plurality of messages with a first entity through a point-to-point link. The token comprises a first means capable of generating time-based One-Time-Passwords from said first secret data. The secure electronic token comprises a second means capable of storing the time used by the token for generating a first One-Time-Password. The secure electronic token comprises a series of duration values. Said first means is capable of generating a series of time-based One-Time-Passwords from both said time and the series of duration values respectively. Each of said generated time-based One-Time-Passwords has a validity duration which is generated from the respective duration value used for generating said One-Time-Password. The secure electronic token comprises a third means capable of using the series of time-based One-Time-Passwords as a series of keys for ciphering/deciphering messages which are exchanged between said token and the first entity.

Advantageously, the validity duration of a One-Time-Password may be equal to the duration value used for generating said One-Time-Password.

In a first embodiment, the series of duration values may be preset.

Alternately, said first entity and said token may comprise a second secret data and the series of duration values may be generated from said second secret data in both said first entity and said token.

Other characteristics and advantages of the present invention will emerge more clearly from a reading of the following description of a number of preferred embodiments of the invention with reference to the corresponding accompanying drawings in which:
- Figure 1 is an example of a system comprising a server entity and a client entity according to the invention; and
- Figure 2 depicts schematically the architecture of a secure electronic token according to one embodiment of the invention.

The invention may apply to any types of server which are able to access a generator of time-based One-Time-Passwords and which are able to access an One-Time-Password verifier. The invention may apply to any types of client which are able to access a generator of time-based One-Time-Passwords. In particular, the client may be a device that embeds software application able to generate time-based One-Time-Passwords. The client may also be couple made of a host machine and a hardware OTP token.

The invention may apply to any types of messages exchanged between two entities through a point-to-point link. In particular, the invention is well-suited for protecting TV streaming over the Internet network.

The invention relies on the synchronized generation of a series of time-based One-Time-Passwords (OTP) at both server and client side. These OTPs are used as temporary session keys. Thus session entity keys are dynamically generated to protect data exchanged between a server and a client without having to transmit these session keys between the server and the client. The generation of the series of time-based OTPs is synchronized via the first OTP generated on client side. The invention uses a series of duration value which are made available at both sides. According to the invention, each duration value has two roles. In one hand the duration value is an input parameter used for generating a temporary session key, in the other hand the duration value is an input parameter used for generating the validity duration of this temporary session key.

In the following detailed embodiments, the client is assumed to have registered to the server and to have exchange its identifier. Moreover both server and client are assumed to have access to OTP generators using synchronized OTP algorithms.

An advantage of the invention is to allow a switch of the used session key without any message sent between the server and the client or any third machine.

Another advantage of the invention is to allow the use of dynamic session keys which are renewed at each session.

Thanks to the invention, the server entity is able to authenticate the client entity via the first OTP generated by the client entity.

Another advantage of the invention is to avoid the distribution of scrambling keys over the network for TV streaming domain.

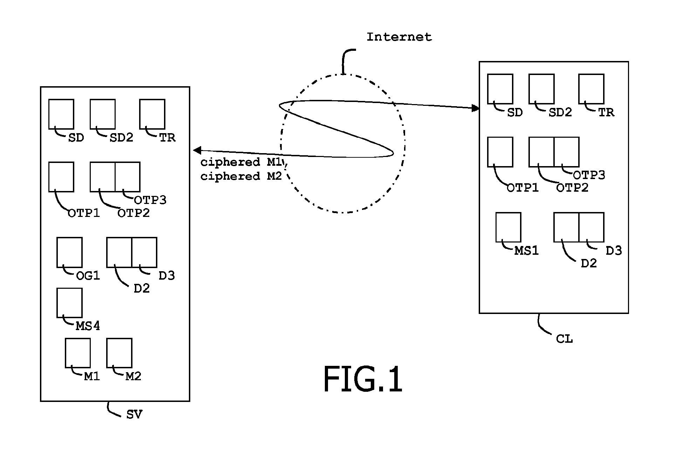

**Figure 1** shows an example of system comprising a server entity SV that exchanges messages M1, M2 with a client entity CL through the Internet according to the invention.

The server entity SV may be made of a one or several machines. In a preferred embodiment, the server entity is a unique machine which acts as content server and OTP generator and authentication server. The server entity SV comprises two secret data SD and SD2 shared with the client entity CL. These secret data SD and SD2 are assumed to have been deployed in a secure way. For example, these secret data may be deployed during a registration step. The server entity SV comprises a time-based OTP generator OG1 and a series of duration values D2 and D3. The server entity SV comprises two messages M1 and M2 and a means MS4 capable of retrieving a time reference from a time-based one-time-password.

The client entity CL comprises the two secret data SD and SD2, a time-based OTP generator MS1 and a series of duration values D2 and D3. In a preferred embodiment, the client entity CL is a unique machine comprising a software OTP generator MS1. Alternately, the client entity CL may be made of a host machine and a hardware OTP token. In this case, the hardware OTP token comprise the OTP generator MS1.

Both OTP generators OG1 and MS1 use the shared secret data SD for computing OTP values.

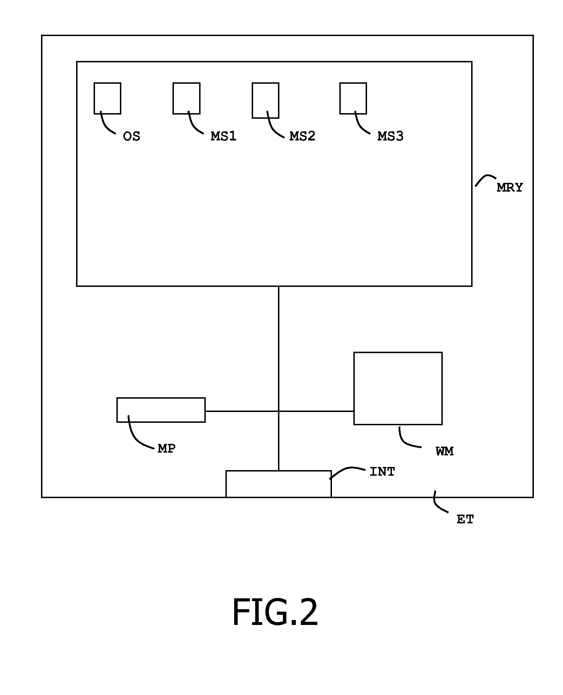

**Figure 2** shows an example of architecture of hardware OTP token ET according to an embodiment of the invention. The token ET contains a microprocessor MP, a communication interface INT, a non volatile memory MRY, and a working memory WM. The working memory may be a RAM memory. The communication interface INT is intended to be connected to a host machine and allows exchanging data with the connected host machine. The host machine may be a computer. The memory MRY may be an EEPROM or a Flash memory. The memory MRY contains an operating system OS and three means MS1, MS2 and MS3. In the example of Figure 2, the memory MRY is implemented as a unique non volatile memory. The memory MRY may also be implemented as any combination of several non volatile memories of different types.

The means MS1 is able to generate time-based one-time-passwords.

The means MS2 is able to store a time value which has been used for the generation of a time-based OTP.

The means MS3 is able to use a set of OTP as a set of keys for ciphering and deciphering data.

Advantageously, the operating system OS may comprise a virtual machine, in particular a Java ® virtual machine or a .Net ® virtual machine.

The microprocessor MP cooperates with the working memory WM and is intended to run the operating system OS. The three means MS1 to MS3 may be either software applications run by the microprocessor MP or hardware designed. These three means may be implemented as three distinct elements or merged in one or several elements.

In a preferred embodiment, the three means are implemented as three different components.

Advantageously, the token ET may be a smart card.

An example of embodiment of the method of ciphering messages according to the invention is described below. The method comprises several steps.

In this embodiment, the server entity SV is an audio/video content provider reachable through the Internet. The server entity SV is intended to distribute audio/video data through a plurality of ordered messages. The server entity SV may be made of a HTTP server and an OTP server. The HTTP server may comprise audio/video content which is to be sent to a client, a segmenter means able to split the audio/video content into a plurality of segments and a play list which provides a set of URL allowing to get the segments.

The client entity CL may be a computer machine connected to the Internet. Alternately, the client entity CL may be a TV, a set-top box, a mobile phone or any device intended to receive the content distributed by the server entity SV. In a preferred embodiment, the client entity CL comprises a web browser and a player able to use the audio/video content received from the server entity SV. The client entity CL comprises a means able to generate the validity duration of a One-Time-Password from the duration value which has been used for generating said One-Time-Password.

The server entity SV is assumed to know the time drift specific to the clock of the client entity CL. For example, the server entity SV may use the identifier of the client CL for getting the time drift from a dedicated storing area, like a table or a database.

The client entity CL generates a first time-based One-Time-Password OTP1 based on a time reference TR. The time reference TR is stored in the client entity CL. OTP1 is generated by using the secret data SD. The client entity CL is able to initiate a session with the server entity SV by sending OTP1 to the server entity SV. The client entity CL sends its identifier with OTP1.

Then the server entity SV retrieves the time reference TR from the received OTP1. Such an operation is well known by people skilled in the art of OTP. For example, the server entity SV may generate a set of OTPs based on a preset time range in order to find one OTP matching the OTP1 value.

From this step, both server entity SV and client entity CL are synchronized thanks to the time reference TR. Then both server entity SV and client entity CL generate a one-time-password OTP2 based on the time reference TR and the first element D2 of the series of duration value. In a preferred embodiment, the time used for OTP2 generation is equal to the sum of TR and D2. Then OTP2 is used by the server entity SV as a first session key for ciphering a first message M1. The message M1 is sent to the client entity CL through the point-to-point link. Then the client entity CL deciphers the received message by using OTP2 as a key. Thus the client entity CL retrieves the original message M1. OTP2 may be valid during a duration equal to the duration value D2. In a preferred embodiment, the OTP2 validity duration starts at TR and ends at TR+D2. Several messages protected by OTP2 may be exchanged between the server entity SV and the client entity CL. Advantageously, the validity durations may be in the range 10 seconds up to 10 minutes.

Then a new one-time-password OTP3 is generated by the server entity SV and the client entity CL. Advantageously, the OTP3 generation may be carried out before the end of the period of validity of OTP2. The one-time-password OTP3 may be generated from the time reference TR, the first and second elements D2 and D3 of the series of duration value. In a preferred embodiment, the time used for OTP3 generation is equal to the sum of TR, D2 and D3. Then OTP3 is used by the server entity SV and the client entity CL as a second session key for ciphering/deciphering the exchanged messages. OTP3 may have a validity duration equal to the duration value D3. In a preferred embodiment, the OTP3 validity duration starts at TR+D2 and ends at TR+D2+D3. For instance, if TR is equal to 12:00:00, D2 is equal to 30 seconds and D3 is equal to 45 seconds then OTP3 is generated by using the time 12:01:15 and OTP3 is valid from 12:00:30 to 12:01:15.

Alternately OTP3 may be generated from the time reference TR and the second element D3 only. Thus the time used for OTP3 generation may be equal to the sum of TR and D3. OTP3 may have a validity duration equal to D3 - D2. For example, the OTP3 validity duration may start at TR+D2 and ends at TR+D3. For instance, if TR is equal to 12:00:00, D2 is equal to 30 seconds and D3 is equal to 1 minute and 15 seconds then OTP3 is generated by using the time 12:01:15 and OTP3 is valid from 12:00:30 to 12:01:15.

The OTP generation mechanism may be repeated as long as required by the session between the server entity SV and the client entity CL. Thus the series of duration values may contain a large amount of duration values. When the end of the series is reached, the system may loop and restart from the first element of the series of duration values.

Alternately, the series of duration values may be negotiated between the server entity SV and the client entity CL at the beginning of the session.

Advantageously, the series of duration value D1, D2 may be preset and deployed in both server entity SV and client entity CL. Alternately the series of duration value D1, D2 may be generated from the secret data SD2 in both server entity SV and client entity CL. Thus the transport of the series of duration value D1, D2 may be avoided.

The wording "Time" used in the present specification stands for time or date/time as known in OTP domain.

## Claims

1. A **method** for ciphering a plurality of messages (M1, M2) sent between first and second entities (SV, CL) through a point-to-point link, said first and second entities (SV, CL) comprising a shared secret data (SD) and being able to generate time-based One-Time-Passwords (OTP1, OTP2, OTP3) from said shared secret data (SD), said method comprising the following steps:
a) generating a first One-Time-Password (OTP1) from a first time (TR) in the second entity (CL) and sending the first One-Time-Password (OTP1) to the first entity (SV),
b) retrieving the first time (TR) from the first One-Time-Password (OTP1) in the first entity (SV), **characterized in that** each of said first and second entities (SV, CL) comprises a series of duration values (D2, D3), and **in that** said method comprises the further steps:
c) generating a series of time-based One-Time-Passwords (OTP2, OTP3) from both the first time (TR) and the series of duration values (D2, D3) respectively in both first and second entities (SV, CL), each of said generated time-based One-Time-Passwords (OTP2, OTP3) having a validity duration which is generated from the duration value (D2, D3) used for generating said One-Time-Password,
d) using said series of time-based One-Time-Passwords (OTP2, OTP3) as a series of keys for ciphering/deciphering messages (M1, M2) which are exchanged between first and second entities (SV, CL).

2. A method according to claim 1, wherein the validity duration of a One-Time-Password is equal to the duration value (D2, D3) used for generating said One-Time-Password.

3. A method according one of claims 1 to 2, wherein the series of duration values (D2, D3) is preset.

4. A method according to one of claims 1 to 2, wherein said first and second entities (SV, CL) comprise a second shared secret data (SD2) and wherein the series of duration values (D2, D3) is generated from the second shared secret data (SD2) in both first and second entities (SV, CL).

5. A method according to one of claims 1 to 4, wherein said second entity (CL) comprises a hardware OTP token.

6. A method according to one of claims 1 to 5, wherein said first entity (SV) comprises a server providing video content.

7. A **secure electronic token** (ET) comprising a first secret data (SD), said token (ET) being intended to exchange a plurality of messages (M1, M2) with a first entity (SV) through a point-to-point link, said token (ET) comprising a first means (MS1) able to generate time-based One-Time-Passwords (OTP1, OTP2, OTP3) from said first secret data (SD),
**characterized in that** said secure electronic token (ET) comprises :
- a second means (MS2) able to store the time (TR) used for generating a first One-Time-Password (OTP1),
- a series of duration values (D2, D3), said first means (MS1) being able to generate a series of time-based One-Time-Passwords (OTP2, OTP3) from both said time (TR) and the series of duration values (D2, D3) respectively, each of said generated time-based One-Time-Passwords (OTP2, OTP3) having a validity duration which is generated from the respective duration value (D2, D3) used for generating said One-Time-Password,
- a third means (MS3) able to use the series of time-based One-Time-Passwords (OTP2, OTP3) as a series of keys for ciphering/deciphering messages which are exchanged between said token (ET) and the first entity (SV).

8. A secure electronic token (ET) according to claim 7, wherein the validity duration of a One-Time-Password is equal to the duration value (D2, D3) used for generating said One-Time-Password.

9. A secure electronic token (ET) according to one of claims 7 to 8, wherein the series of duration values (D2, D3) is preset.

10. A secure electronic token (ET) according to one of claims 7 to 8, wherein said first entity (SV) and said token (ET) comprise a second secret data (SD2) and wherein the series of duration values (D2, D3) is generated from said second secret data (SD2) in both said first entity (SV) and said token (ET).
